# EUROPEAN PATENT APPLICATION

(11) **EP 2 346 279 A1**
(43) Date of publication of application: **20.07.2011**
(21) Application number: 09824744.8
(22) Date of filing: 29.10.2009
(51) Int. Cl.: H04W 24/10, H04B 7/04, H04J 11/00, H04J 99/00, H04W 16/28, H04W 72/12

(54) **MOBILE TERMINAL APPARATUS AND RADIO BASE STATION APPARATUS**

(30) Priority: 04.11.2008 JP 2008283554
(71) Applicant: NTT DOCOMO, INC., Chiyoda-ku Tokyo 100-6150 (JP)
(72) Inventor: KISHIYAMA, Yoshihisa, Tokyo 100-6150 (JP); TAOKA, Hidekazu, Tokyo 100-6150 (JP); TANNO, Motohiro, Tokyo 100-6150 (JP)
(74) Representative: HOFFMANN EITLE
(86) International application number: PCT/JP2009/068591
(87) International publication number: WO 2010/053044

(57) **Abstract**

There is provided a mobile terminal apparatus and a radio base station apparatus capable of transmitting a downlink signal using an optimum feedback parameter even when a control delay exists and improving throughput characteristics of a downlink channel. A mobile terminal apparatus (1) measures a feedback parameter for a radio base station apparatus (3) using a received signal, obtains a feedback value, predicts a feedback parameter after a control delay in which the feedback value is reflected on transmission of a downlink shared channel to obtain a feedback predicted value, transmits the feedback predicted value to the radio base station apparatus, and the radio base station apparatus (3) selects a precoding weight of MIMO channel transmission using the feedback predicted value and schedules the downlink shared channel using the feedback predicted value.

## Description

### TECHNICAL FIELD

The present invention relates to a radio base station apparatus and a mobile terminal apparatus in a next-generation mobile communication system.

### BACKGROUND ART

UMTS (Universal Mobile Telecommunications System) networks are making the most of the features of a W-CDMA (Wideband Code Division Multiple Access) based system by adopting HSDPA (High Speed Downlink Packet Access) and HSUPA (High Speed Uplink Packet Access) aiming at improving frequency utilization efficiency and improving data rates. For these UMTS networks, Long Term Evolution (LTE) is under study for the purpose of realizing higher data rates and lower delays or the like (Non-Patent Documents 1 to 3) . As a multiplexing scheme, LTE uses OFDMA (Orthogonal Frequency Division Multiple Access) which is different fromW-CDMA for a downlink and SC-FDMA (Single Carrier Frequency Division Multiple Access) for an uplink.

Third-generation systems can generally realize a transmission rate on the order of maximum 2 Mbps on the downlink using a 5-MHz fixed band. On the other hand, LTE systems can realize a transmission rate of maximum 300 Mbps on the downlink and on the order of 75 Mbps on the uplink using a variable band of 1.4 MHz to 20 MHz. In the UMTS networks, systems as successors of LTE are also under study for the purpose of realizing wider band and higher speed (e.g., LTE Advanced (LTE-A)) . Therefore, a plurality of such mobile communication systems are expected to coexist in the future and a configuration (radio base station apparatus and mobile terminal apparatus or the like) capable of supporting a plurality of such systems is considered necessary.

In order to optimize transmission of a downlink signal, in an LTE system, a mobile terminal apparatus measures a feedback parameter for a radio base station using a downlink received signal and transmits the feedback parameter using an uplink signal. Examples of such feedback parameters include downlink channel quality information (CQI: Channel Quality Indicator) for scheduling of a downlink shared channel and adaptive control, and precoding matrix information (PMI: Precoding Matrix Indicator) of MIMO (Multiple Input Multiple Output) transmission (Non-Patent Documents 1 to 3).

### Citation List

### Non-Patent Literature

[Non-Patent Literature 1]
   3GPP, TS 36.211 (V.8.4.0), "Evolved Universal Terrestrial Radio Access (E-UTRA) ; Physical Channels and Modulation (Release 8)". Sep. 2008
[Non-Patent Literature 2]
   3GPP, TS 36.212 (V.8.4.0), "Evolved Universal Terrestrial Radio Access (E-UTRA); Multiplexing and channel coding (Release 8)", Sep. 2008
[Non-Patent Literature 3]
   3GPP, TS 36.213 (V.8.4.0), "Evolved Universal Terrestrial Radio Access (E-UTRA); Physical layer procedures (Release 8)", Sep. 2008

### Summary of the Invention

### Technical Problem

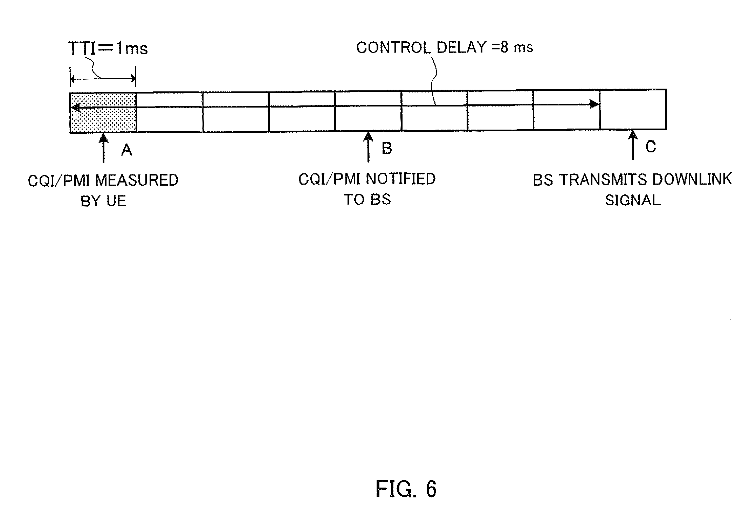

When, for example, a mobile terminal apparatus (UE: User Equipment) measures a CQI or PMI as a feedback parameter, feeds back the CQI or PMI to a radio base station apparatus (BS: Base Station) so that the parameter is reflected on transmission of a downlink signal, a control delay (Tcont) is generated. To be more specific, as shown, for example, in FIG.6, assuming a transmission time interval (TTI) is 1 ms, a control delay amounts to 8 ms after the UE measures CQI/PMI (A) , feeds back the CQI/PMI to the BS (B) until the BS transmits a downlink signal using the CQI/PMI (C).

Thus, since a control delay is generated between the time point at which the UE measures the CQI/PMI and the time point at which the BS transmits a downlink signal, information of the CQI/PMI which is a feedback parameter may no longer be optimum at the time point at which the BS transmits the downlink signal due to influences of a fading variation. Especially when the moving speed is high, since the fading variation within a control delay time increases, a CQI/PMI error increases and it is not possible to transmit a downlink signal using an optimum CQI/PMI and throughput characteristics of the downlink channel may deteriorate.

The present invention has been implemented in view of such problems and it is an object of the present invention to provide a mobile terminal apparatus and a radio base station apparatus capable of transmitting a downlink signal using optimum feedback parameters even when a control delay exists and improving throughput characteristics of a downlink channel.

### Solution to Problem

A mobile terminal apparatus of the present invention includes feedback parameter measuring section configured to measure a feedback parameter for a radio base station apparatus using a received signal and obtaining a feedback value, feedbackparameter predicting section configured to predict a feedback parameter after a control delay in which the feedback value is reflected on transmission of a downlink shared channel and obtain a feedback predicted value and transmitting section configured to transmit the feedback predicted value to the radio base station apparatus.

A radio base station apparatus of the present invention includes feedback parameter predicting section configured to predict an optimum feedback parameter for transmission of a downlink shared channel using a history of feedback values of feedback parameters for the radio base station apparatus from a mobile terminal apparatus and obtain a feedback predicted value, precoding weight selecting section configured to select a precoding weight of MIMO channel transmission using the feedback predicted value and scheduling section configured to schedule a downlink shared channel using the feedback predicted value.

### Technical Advantage of the Invention

According to the present invention, the mobile terminal apparatus measures a feedback parameter for the radio base station apparatus using a received signal, obtains a feedback value, predicts a feedback parameter after a control delay in which the feedback value is reflected on transmission of a downlink shared channel, obtains a feedback predicted value, transmits the feedback predicted value to the radio base station apparatus, the radio base station apparatus selects a precoding weight of MIMO channel transmission using the feedback predicted value and schedules the downlink shared channel using the feedback predicted value. Alternatively, the mobile terminal apparatus measures a feedback parameter using a received signal, obtains a feedback value, transmits the feedback value to the radio base station apparatus, the radio base station apparatus predicts an optimum feedback parameter for transmission of the downlink shared channel using a history of the feedback value, obtains a feedback predicted value, selects a precoding weight of MIMO channel transmission using the feedback predicted value and schedules the downlink shared channel using the feedback predicted value. Thus, even when a control delay exists, it is possible to transmit a downlink signal using an optimum feedback parameter and improve throughput characteristics of the downlink channel.

### Brief Description of Drawings

FIG.1 is a diagram illustrating radio communication between a mobile terminal apparatus and a radio base station apparatus according to an embodiment of the present invention;
FIG. 2 is a diagram illustrating a schematic configuration of the mobile terminal apparatus (supporting an LTE-A system) according to the embodiment of the present invention;
FIG.3 is a diagram illustrating a schematic configuration of a mobile terminal apparatus (supporting an LTE system) according to the embodiment of the present invention;
FIG.4 is a diagram illustrating a schematic configuration of a radio base station apparatus according to the embodiment of the present invention;
FIG. 5 (a) is a diagram illustrating a case where the mobile terminal apparatus predicts a CQI or PMI and FIG.5(b) is a diagram illustrating a case where the radio base station apparatus predicts a CQI or PMI; and
FIG.6 is a diagram illustrating a control delay in which a CQI or PMI is reflected at downlink signal transmission timing.

### Description of Embodiments

Hereinafter, an embodiment of the present invention will be described in detail with reference to the accompanying drawings. The present embodiment will describe a case where a CQI and/or PMI are/is used as a feedback parameter(s) to optimize transmission of a downlink signal of a radio base station apparatus and the CQI and/or PMI is/are measured using a reference signal (RS) included in a downlink signal.

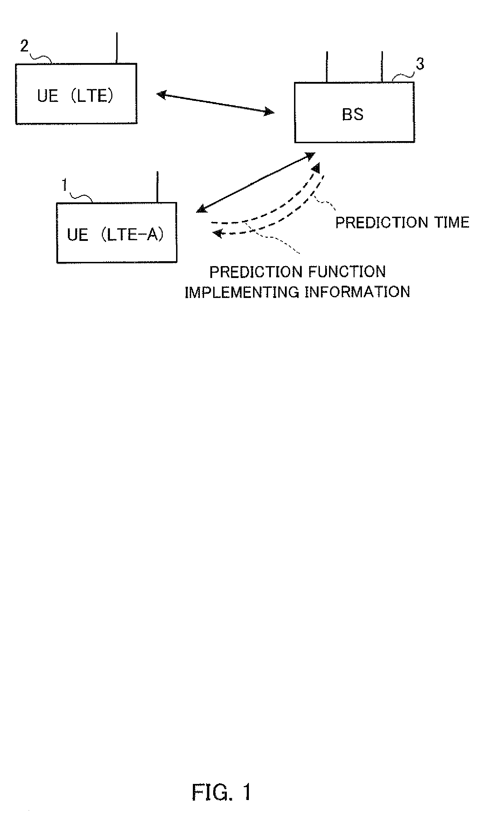

FIG.1 is a block diagram schematically illustrating a radio communication system made up of a radio base station apparatus and a mobile terminal apparatus according to the embodiment of the present invention. The radio base station apparatus (BS) 3 according to the present invention wirelessly communicates with a mobile communication terminal UE 1 compatible with a mobile communication system (LTE-A system) having a relatively wide system band composed of a plurality of component carriers and also wirelessly communicates with a mobile communication system (LTE system) 2 having a relatively narrow system band composed of one component carrier.

In radio communication between the BS 3 and the UE 2 (supporting an LTE system) of the present radio communication system, since the BS 3 is provided with a prediction function (function of predicting an optimum CQI or PMI when downlink signal is transmitted), the UE 2 performs channel estimation using a CQI and performs precoding using a PMI as with an LTE system. On the other hand, in radio communication between the BS 3 and the UE 1 (supporting an LTE-A system), since the UE 1 is provided with the present prediction function, prediction-related information needs to be notified between the BS 3 and the UE 1. The prediction-related information refers to, for example, information on the degree to which future CQI or PMI the UE 1 predicts (downlink signal transmission timing (prediction time)) and whether or not the UE is provided with the present prediction function (implementing of the prediction function). The information on the prediction time is transmitted from the BS 3 to the UE 1 and the information on the implementing of the prediction function is transmitted from the UE 1 to the BS 3.

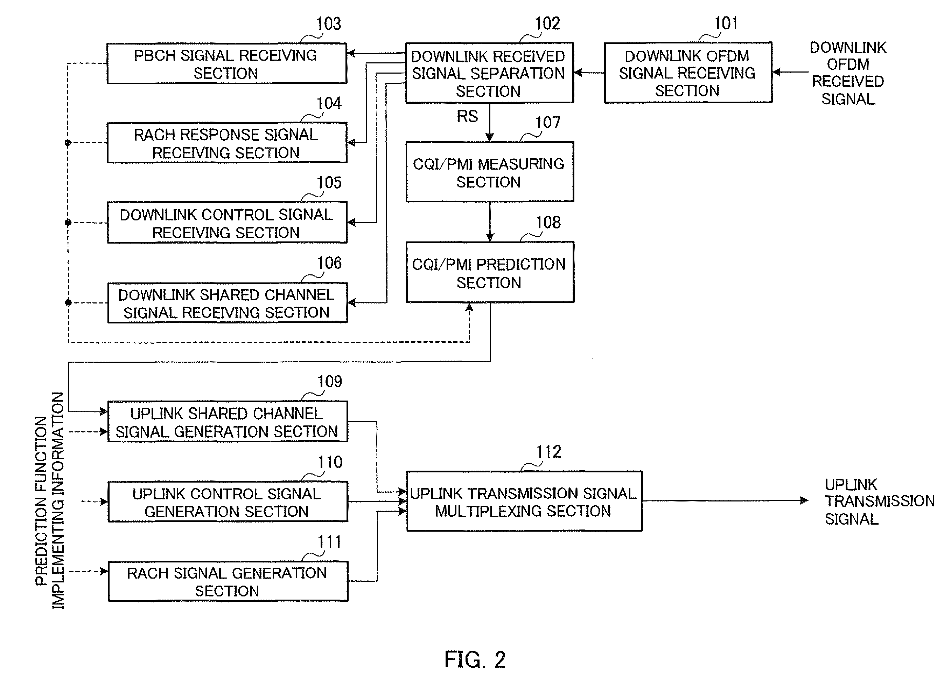

FIG.2 is a block diagram illustrating a schematic configuration of the mobile terminal apparatus (supporting an LTE-A system) according to the embodiment of the present invention. The UE 1 is provided with the function of predicting a CQI or PMI and predicts the CQI or PMI which becomes optimum when downlink signal of the BS 3 transmitted using past CQI measured values or PMI measured values. Suppose the UE 1 is provided with the function which would be implemented in mobile terminal apparatus for an LTE-A system.

The mobile terminal apparatus shown in FIG.2 is provided with a receiving system processing section and a transmitting system processing section. The receiving system processing section includes a downlink OFDM signal receiving section 101 that receives a downlink OFDM signal, a downlink received signal separation section 102 that separates a downlink received signal, a PBCH signal receiving section 103 that receives a PBCH signal, an RACH response signal receiving section 104 that receives an RACH response signal, a downlink control signal receiving section 105 that receives a downlink control signal and a downlink shared channel signal receiving section 106 that receives a downlink shared channel signal.

The transmitting system processing section includes an uplink shared channel signal generation section 109 that generates an uplink shared channel signal, an uplink control signal generation section 110 that generates an uplink control signal, an RACH signal generation section 111 that generates a random access channel (RACH (Random Access Channel) ) signal and an uplink transmission signal multiplexing section 112 that multiplexes these signals into an uplink transmission signal.

Furthermore, the UE 1 also includes a CQI/PMI measuring section 107 that measures a CQI using a reference signal (RS) included in the downlink received signal to obtain a CQI measured value and also measures a PMI using a reference signal to obtain a PMI measured value and a CQI/PMI prediction section 108 that predicts a CQI at downlink signal transmission timing from past CQI measured values to obtain a CQI predicted value and also predicts a PMI at downlink signal transmission timing from past PMI measured values to obtain a PMI predicted value.

The downlink OFDM signal receiving section 101 receives a downlink OFDM signal which is a downlink received signal, performs predetermined reception processing to convert the signal into a baseband signal, performs FFT (Fast Fourier Transform) calculation on the baseband signal to obtain signals allocated to respective subcarriers and applies demapping and deinterleaving thereto to obtain a downlink received signal. The downlink received signal is outputted to the downlink received signal separation section 102.

The downlink received signal separation section 102 separates the downlink received signal into a PBCH signal, an RACH response signal, a downlink control signal and a downlink shared channel signal. The downlink received signal separation section 102 sends the PBCH signal to the PBCH signal receiving section 103, sends the RACH response signal to the RACH response signal receiving section 104, sends the downlink control signal to the downlink control signal receiving section 105 and sends the downlink shared channel signal to the downlink shared channel signal receiving section 106.

The PBCH signal receiving section 103 receives the PBCH signal. When the PBCH signal includes information on a prediction time for predicting a CQI or PMI, the PBCH signal receiving section 103 sends the information on the prediction time to the CQI/PMI prediction section 108.

The RACH response signal receiving section 104 receives the RACH response signal. When the RACH response signal includes information on a prediction time for predicting a CQI or PMI, the RACH response signal receiving section 104 sends the information on the prediction time to the CQI/PMI prediction section 108.

The downlink control signal receiving section 105 receives the downlink control signal (downlink L1/L2 control signal). When the downlink control signal includes information on a prediction time for predicting a CQI or PMI, the downlink control signal receiving section 105 sends the information on the prediction time to the CQI/PMI prediction section 108.

The downlink shared channel signal receiving section 106 receives the downlink shared channel signal. When the downlink shared channel signal includes information on a prediction time for predicting a CQI or PMI, the downlink shared channel signal receiving section 106 sends the information on the prediction time to the CQI/PMI prediction section 108.

The uplink shared channel signal generation section 109 generates an uplink shared channel signal using uplink transmission data from a higher layer. The uplink shared channel signal may also include information (prediction function implementing information) indicating that the terminal apparatus is a mobile terminal apparatus implemented with a prediction function. Transmitting the prediction function implementing information to the BS using an uplink transmission signal in this way eliminates the necessity for the BS to predict a CQI or PMI.

The uplink control signal generation section 110 generates an uplink control signal. The uplink control signal may also include information indicating that the terminal apparatus is a mobile terminal apparatus implemented with a prediction function (prediction function implementing information). Thus, transmitting the prediction function implementing information to the BS using an uplink transmission signal eliminates the necessity for the BS to predict a CQI or PMI.

The RACH signal generation section 111 generates an RACH signal (preamble and message). The RACH signal may also include information indicating that the terminal apparatus is a mobile terminal apparatus implemented with a prediction function (prediction function implementing information). Transmitting the prediction function implementing information to the BS using an uplink transmission signal eliminates the necessity for the BS to predict a CQI or PMI.

The uplink transmission signal multiplexing section 112 multiplexes the uplink shared channel signal generated by the uplink shared channel signal generation section 109, the uplink control signal generated by the uplink control signal generation section 110 and the RACH signal generated by the RACH signal generation section 111. The uplink transmission signal multiplexing section 112 outputs the multiplexed transmission signal as an uplink transmission signal.

The CQI/PMI measuring section 107 performs channel estimation using a reference signal (RS) included in the downlink received signal, measures a CQI which is channel quality information and obtains a CQI measured value. Furthermore, CQI/PMI measuring section 107 measures an SINR (Signal-to-Interference plus Noise power Ratio) which is receiving quality using the reference signal, and measures such a PMI that the SINR becomes maximum when the downlink signal is received through MIMO transmission to obtain a PMI measured value. The CQI measured value and/or PMI measured value are/is outputted to the CQI/PMI prediction section 108.

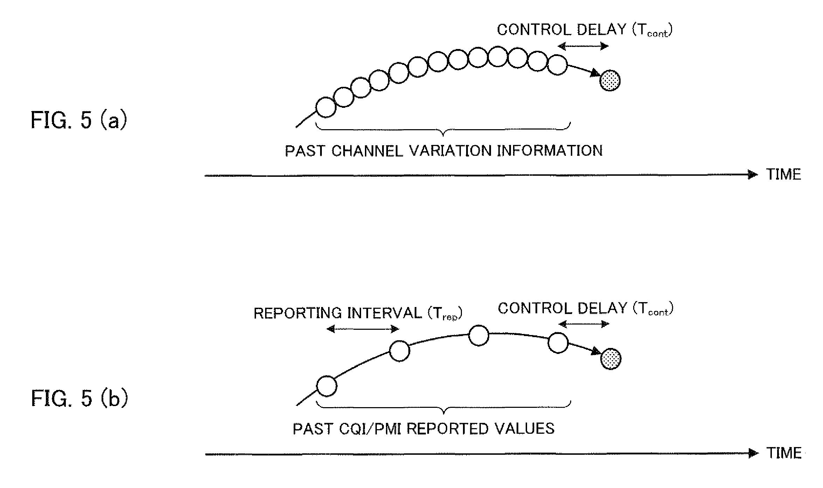

The CQI/PMI prediction section 108 predicts a CQI after a control delay (Tcont) in which the CQI measured value is reflected on the transmission of the downlink shared channel to obtain a CQI predicted value and predicts a PMI after a control delay (Tcont) in which the PMI measured value is reflected on the transmission of the downlink shared channel to obtain a PMI predicted value. That is, the CQI/PMI prediction section 108 stores a CQI measured value, predicts a CQI after a control delay (Tcont) using past CQI measured values as past channel variation information to obtain a CQI predicted value and also stores the PMI measured value and predicts a PMI after a control delay (Tcont) using past PMI measured values as past channel variation information to obtain a PMI predicted value. To be more specific, as shown in FIG.5(a), the CQI/PMI prediction section 108 performs linear prediction based on the channel variation information using the CQI measured value or PMI measured value (white circles in the figure) as past channel variation information and calculates the CQI predicted value or PMI predicted value (black circle in the figure).

When implemented with a prediction function as with the UE 1, the mobile terminal apparatus can use a CQI measured value and PMI measured value other than the CQI measured value and PMI measured value when notifying a CQI or PMI to the BS 3 as channel variation information. Furthermore, when the mobile terminal apparatus makes a prediction, the mobile terminal apparatus can use all information available (not quantized information) as channel variation information. Thus, the mobile terminal apparatus can accurately acquire the channel variation information and predict a CQI or PMI with high accuracy.

The CQI/PMI prediction section 108 calculates a CQI predicted value or PMI predicted value based on the information on the prediction time included in the downlink received signal. When the information on this prediction time is received included in the PBCH signal, the information is sent from the PBCH signal receiving section 103 to the CQI/PMI prediction section 108, when received included in the RACH response signal, the information is sent from the RACH response signal receiving section 104 to the CQI/PMI prediction section 108, when received included in the downlink control signal, the information is sent from the downlink control signal receiving section 105 to the CQI/PMI prediction section 108 and when received included in the downlink shared channel signal, the information is sent from the downlink shared channel signal receiving section 106 to the CQI/PMI prediction section 108.

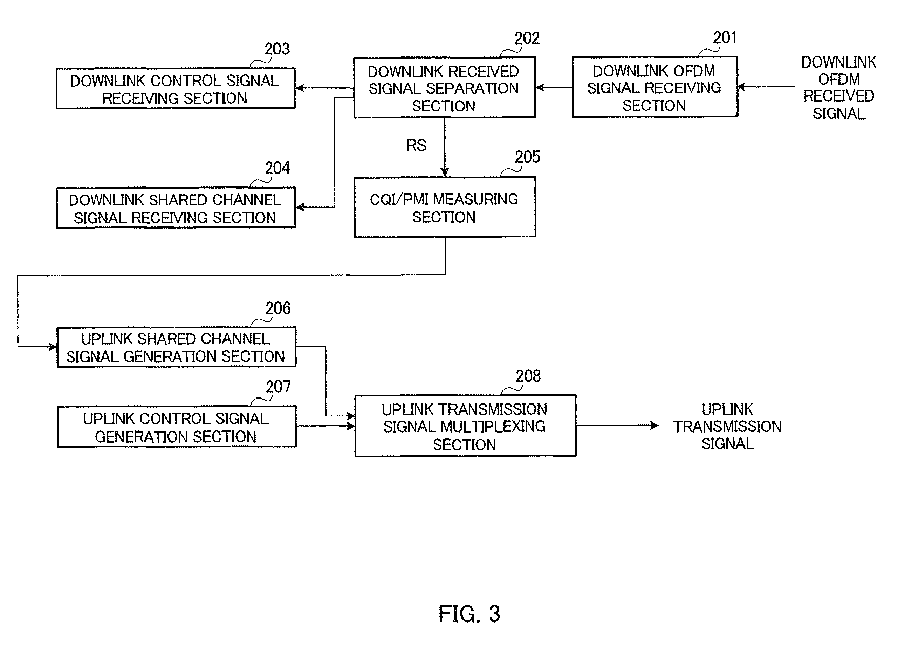

FIG.3 is a block diagram illustrating a schematic configuration of the mobile terminal apparatus (supporting an LTE system) according to the embodiment of the present invention. The UE 2 is not provided with the function of predicting a CQI or PMI. However, suppose the UE 2 is provided with functions normally implemented in a mobile terminal apparatus for an LTE system.

The mobile terminal apparatus shown in FIG.3 is provided with a receiving system processing section and a transmitting system processing section. The receiving system processing section includes a downlink OFDM signal receiving section 201 that receives a downlink OFDM signal, a downlink received signal separation section 202 that separates the downlink received signal, a downlink control signal receiving section 203 that receives a downlink control signal and a downlink shared channel signal receiving section 204 that receives a downlink shared channel signal.

The transmitting system processing section includes an uplink shared channel signal generation section 206 that generates an uplink shared channel signal, an uplink control signal generation section 207 that generates an uplink control signal and an uplink transmission signal multiplexing section 208 that multiplexes these signals into an uplink transmission signal.

Furthermore, the UE 2 also includes a CQI/PMI measuring section 205 that measures a CQI using a reference signal (RS) included in the downlink received signal to obtain a CQI measured value and also measures a PMI using a reference signal to obtain a PMI measured value.

The downlink OFDM signal receiving section 201 receives a downlink OFDM signal which is a downlink received signal, applies predetermined reception processing thereto to convert the signal to a baseband signal, applies FFT (Fast Fourier Transform) calculation to the baseband signal to obtain signals allocated to respective subcarriers and applies demapping and deinterleaving thereto to obtain a downlink received signal. The downlink received signal is outputted to the downlink received signal separation section 202.

The downlink received signal separation section 202 separates the downlink received signal into a downlink control signal and a downlink shared channel signal. The downlink received signal separation section 202 sends the downlink control signal to the downlink control signal receiving section 203 and sends the downlink shared channel signal to the downlink shared channel signal receiving section 204.

The uplink shared channel signal generation section 206 generates an uplink shared channel signal using uplink transmission data from a higher layer. The uplink control signal generation section 207 generates an uplink control signal. The uplink transmission signal multiplexing section 208 multiplexes the uplink shared channel signal generated by the uplink shared channel signal generation section 206 and the uplink control signal generated by the uplink control signal generation section 207. The uplink transmission signal multiplexing section 208 outputs the multiplexed transmission signal as an uplink transmission signal.

The CQI/PMI measuring section 205 performs channel estimation using a reference signal (RS) included in the downlink received signal and measures a CQI which is channel quality information to obtain a CQI measured value. Furthermore, the CQI/PMI measuring section 205 measures an SINR which is receiving quality using the reference signal and measures such a PMI that the SINR becomes maximum when the downlink signal is received through MIMO transmission to obtain a PMI measured value. The CQI measured value and/or PMI measured value are/is outputted to the uplink shared channel signal generation section 206.

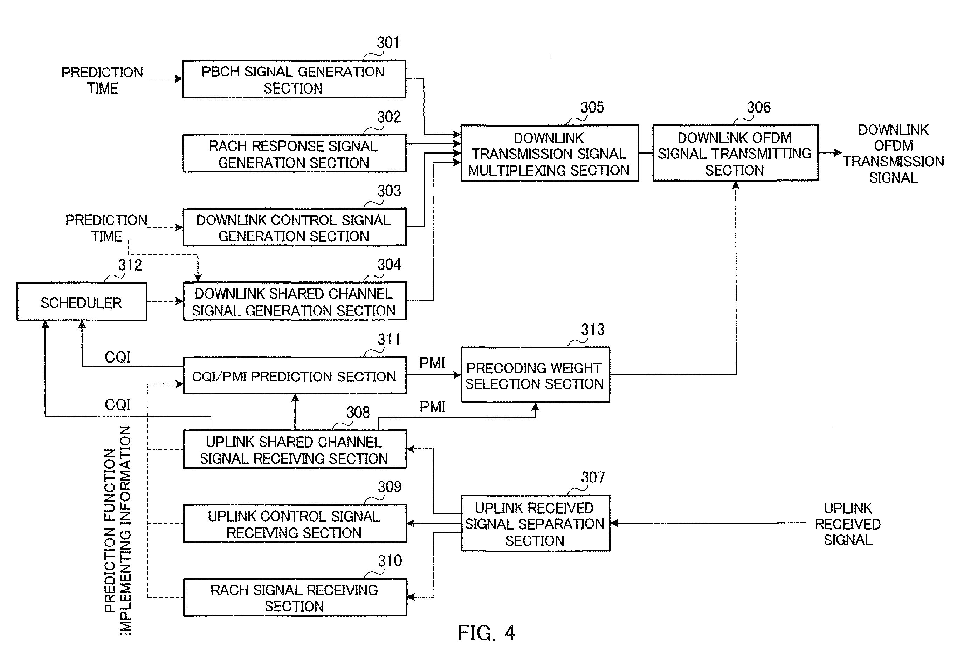

FIG.4 is a block diagram illustrating a schematic configuration of the radio base station apparatus according to the embodiment of the present invention. The BS 3 is provided with a function of predicting a CQI or PMI and predicts, when wirelessly communicating with the mobile terminal apparatus UE 2 supporting an LTE system, a CQI or PMI which becomes optimum at downlink signal transmission timing using past CQI measured values (reported values) or PMI measured values (reported values). Furthermore, when wirelessly communicating with the mobile terminal apparatus UE 1 supporting an LTE-A system, the UE1 predicts a CQI or PMI which becomes optimum at downlink signal transmission timing, and therefore the BS 3 does not predict a CQI or PMI. However, suppose the BS 3 is provided with functions normally implemented in a radio base station apparatus.

The radio base station apparatus shown in FIG. 4 is provided with a transmitting system processing section and a receiving system processing section. The transmitting system processing section includes a PBCH signal generation section 301 that generates a PBCH signal, an RACH response signal generation section 302 that generates an RACH response signal, a downlink control signal generation section 303 that generates a downlink control signal, a downlink shared channel signal generation section 304 that generates a downlink shared channel signal, a downlink transmission signal multiplexing section 305 that multiplexes these signals into a downlink transmission signal and a downlink OFDM signal transmitting section 306 that transmits the downlink transmission signal as a downlink OFDM signal.

The receiving system processing section includes an uplink received signal separation section 307 that separates an uplink received signal into respective signals, an uplink shared channel signal receiving section 308 that receives an uplink shared channel signal, an uplink control signal receiving section 309 that receives an uplink control signal and an RACH receiving section 310 that receives an RACH signal.

Furthermore, the BS 3 also includes a CQI/PMI prediction section 311 that predicts a CQI at downlink signal transmission timing from past CQI measured values (reported values) to obtain a CQI predicted value and also predicts a PMI at downlink signal transmission timing from past PMI measured values (reported values) to obtain a PMI predicted value, a scheduler 312 that schedules a shared channel using the CQI predicted value or CQI measured value (reported value) and a precoding weight selection section 313 that selects a precoding weight using the PMI predicted value or PMI measured value (reported value).

The PBCH signal generation section 301 generates a PBCH signal. The PBCH signal generation section 301 may also include information on a prediction time of predicting a CQI or PMI in the PBCH signal. The PBCH signal is sent to the downlink transmission signal multiplexing section 305.

The downlink control signal generation section 303 generates a downlink control signal (downlink L1/L2 control signal). The downlink control signal generation section 303 may also include information on a prediction time of predicting a CQI or PMI in the downlink control signal. The downlink control signal is sent to the downlink transmission signal multiplexing section 305.

The downlink shared channel signal generation section 304 generates a downlink shared channel signal. The downlink shared channel signal generation section 3 04 may also include information on a prediction time of predicting a CQI or PMI in the downlink shared channel signal. When the information on the prediction time of predicting a CQI or PMI is included in the downlink shared channel signal, for example the information that is included in an STB (System Information Block) can be sent. The downlink shared channel signal is sent to the downlink transmission signal multiplexing section 305.

The uplink received signal separation section 307 separates the uplink received signal into an uplink shared channel signal, an uplink control signal and an RACH signal. The uplink received signal separation section 307 sends the uplink shared channel signal to the uplink shared channel signal receiving section 308, sends the uplink control signal to the uplink control signal receiving section 309 and sends the RACH signal to the RACH signal receiving section 310.

The uplink shared channel signal receiving section 308 receives the uplink shared channel signal. Since the uplink shared channel signal of the UE 2 supporting an LTE system includes a CQI measured value (reported value) and PMI measured value (reported value) , the CQI measured value (reported value) and PMI measured value (reported value) are sent to the CQI/PMI prediction section 311 to predict a CQI or PMI. On the other hand, since the uplink shared channel signal of the UE 1 supporting an LTE-A system includes a CQI predicted value and PMI predicted value, the CQI predicted value is sent to the scheduler 312 and the PMI predicted value is sent to the precoding weight selection section 313.

Furthermore, when the uplink shared channel signal includes information indicating that the mobile terminal apparatus is a mobile terminal apparatus implemented with a prediction function (prediction function implementing information), the uplink shared channel signal receiving section 308 sends the prediction function implementing information to the CQI/PMI prediction section 311. This eliminates the necessity for the CQI/PMI prediction section 311 to predict a CQI or PMI.

The uplink control signal generation section 309 receives the uplink control signal. When the uplink control signal includes information indicating that the mobile terminal apparatus is a mobile terminal apparatus implemented with a prediction function (prediction function implementing information), the uplink control signal generation section 309 sends the prediction function implementing information to the CQI/PMI prediction section 311. This eliminates the necessity for the CQI/PMI prediction section 311 to predict a CQI or PMI.

The RACH signal generation section 310 receives the RACH signal (preamble and message). When the RACH signal includes information indicating that the mobile terminal apparatus is a mobile terminal apparatus implemented with a prediction function (prediction function implementing information) , the RACH signal generation section 310 sends the prediction function implementing information to the CQI/PMI prediction section 311. This eliminates the necessity for the CQI/PMI prediction section 311 to predict a CQI or PMI.

The CQI/PMI prediction section 311 predicts a CQI after a control delay (Tcont) in which the CQI measured value is reflected on the transmission of the downlink shared channel to obtain a CQI predicted value and also predicts a PMI after a control delay (Tcont) in which the PMI measured value is reflected on the transmission of the downlink shared channel to obtain a PMI predicted value. That is, the CQI/PMI prediction section 311 stores CQI measured values (reported values) sent from the UE at a predetermined reporting interval (Trep), uses past CQI measured values (reported values) (history) as past channel variation information, predicts a CQI after a control delay (Tcont) , obtains an optimum CQI predicted value for transmission of the downlink shared channel, and also stores PMI measured values (reported values) sent from the UE at a predetermined reporting interval (Trep) , uses past PMI measured values (reported values) (history) as past channel variation information, predicts a PMI after a control delay (Tcont) and obtains an optimum PMI predicted value for transmission of the downlink shared channel. To be more specific, as shown in FIG.5(b), the CQI/PMI prediction section 311 uses CQI measured values (reported values) and PMI measured values (reported values) (white circles in the figure) as past channel variation information, performs linear prediction based on the channel variation information and calculates a CQI predicted value and a PMI predicted value (black circle in the figure).

The CQI/PMI prediction section 311 does not predict a CQI/PMI of the UE 1 (supporting an LTE-A system) provided with a CQI/PMI prediction function. Therefore, upon receiving the prediction function implementing information included in the uplink shared channel signal, uplink control signal or RACH signal, the CQI/PMI prediction section 311 does not predict the CQI/PMI. In this case, the CQI predicted value included in the uplink shared channel signal is sent to the scheduler 312 and the PMI predicted value included in the uplink shared channel signal is sent to the precoding weight selection section 313.

The scheduler 312 schedules the transmission signal of the downlink shared channel. When performing scheduling, the scheduler 312 preferentially allocates data to carriers having a good propagation environment using the CQI predicted value. The CQI predicted value is a CQI predicted value predicted by the UE 1 in radio communication with the UE 1 supporting an LTE-A system and sent with an uplink signal and is a CQI predicted value predicted by the CQI/PMI prediction section 311 in radio communication with the UE 2 supporting an LTE system.

The precoding weight selection section 313 selects a precoding weight of MIMO channel transmission. The selected precoding weight is used when a weight is assigned to each antenna for MIMO transmission. The PMI predicted value is a PMI predicted value predicted by the UE 1 in radio communication with the UE 1 supporting an LTE-A system and sent with an uplink signal and is a PMI, predicted value predicted by the CQI/PMI prediction section 311 in radio communication with the UE 2 supporting an LTE system.

Next, a case will be described where radio communication is performed between the mobile terminal apparatus and the radio base station apparatus having the above described configurations. Here, a case will be described where as shown in FIG.1, the BS 3 predicts a CQI/PMI in radio communication between the BS 3 and the UE 2 (supporting an LTE system) , and the UE 1 predicts a CQI/PMI in radio communication between the BS 3 and the UE 1 (supporting an LTE-A system). In this case, the BS 3 transmits information on a prediction time to the UE 1 through a downlink shared channel and the UE 1 transmits information on the implementing of a prediction function to the BS 3 through an uplink shared channel.

First, the radio communication between the BS 3 and the UE 1 (supporting an LTE-A system) will be described. In this radio communication, the UE 1 measures a CQI and/or PMI using a reference signal (RS) to obtain a CQI measured value and/or PMI measured value, predicts a CQI and/or PMI after a control delay using the CQI measuredvalue and/or PMI measured value until the CQI measured value and/or PMI measured value are/is reflected on the transmission of the downlink shared channel to obtain a CQI predicted value and/or PMI predicted value and transmits the CQI predicted value and/or PMI predicted value to the radio base station apparatus. After that, the BS selects a precoding weight of MIMO channel transmission using the PMI predicted value and schedules the downlink shared channel using the CQI predicted value.

That is, the CQI/PMI measuring section 107 of the UE 1 shown in FIG.2 obtains a CQI measured value using a reference signal (RS) included in a downlink received signal and also obtains a PMI measured value first. Next, the CQI/PMI prediction section 108 performs linear prediction from past CQI measured values as shown in FIG. 5 (a) to obtain a CQI predicted value and performs linear prediction from past PMI measured values as shown in FIG.5(a) to obtain a PMI predicted value. Tn this case, since the prediction time is notified from the BS 3 through a downlink shared channel, the CQI/PMI prediction section 108 predicts a CQI/PMI for the prediction time.

The CQI predicted value and/or PMI predicted value predicted in this way are/is generated by the uplink shared channel signal generation section 109 as an uplink shared channel signal, multiplexed with other signals by the uplink transmission signal multiplexing section 112 and sent to the BS 3 as an uplink transmission signal. Furthermore, the prediction function implementing information is also generated by the uplink shared channel signal generation section 109 as an uplink shared channel signal, multiplexed with other signals by the uplink transmission signal multiplexing section 112 and sent to the BS 3 as an uplink transmission signal.

Next, in the BS 3 shown in FIG. 4, the uplink shared channel signal receiving section 308 receives an uplink shared channel signal and sends prediction function implementing information included in the uplink shared channel signal to the CQI/PMI prediction section 311. Thus, the CQI/PMI prediction section 311 does not predict a CQI/PMI. The CQI predicted value included in the uplink shared channel signal is sent to the scheduler 312 and the scheduler 312 schedules the downlink shared channel with a CQI predicted value (optimum CQI when downlink signal is transmitted). Furthermore, the PMI predicted value included in the uplink shared channel signal is sent to the precoding weight selection section 313 and the precoding weight selection section 313 selects a precoding weight with a PMI predicted value (optimum PMI when downlink signal is transmitted). This precoding weight is used for MIMO transmission.

Thus, according to the radio communication method, even when a control delay exists, it is possible to transmit a downlink signal using an optimum CQI/PMI and improve throughput characteristics of the downlink channel. Particularly since the UE 1 is implemented with a prediction function, it is possible to use all information (not quantized information) obtained by the UE 1 as channel variation information and thereby accurately acquire channel variation information and predict a CQI or PMI with high accuracy.

Next, the radio communication between the BS 3 and the UE 2 (supporting an LTE system) will be described. In this radio communication, the UE 2 measures a CQI and/or PMI using a reference signal to obtain a CQI measured value and/or PMI measured value and transmits the CQI measured value and/or PMI measured value to the radio base station apparatus. After that, the BS predicts an optimum CQI and/or PMI for transmission of the downlink shared channel using a history of the CQI measured value and/or PMI measured value to obtain a CQI predicted value and/or PMI predicted value, selects a precoding weight of MIMO channel transmission using the PMI predicted value and schedules the downlink shared channel using the CQI predicted value.

That is, the CQI/PMI measuring section 205 of the UE 2 shown in FIG. 3 measures a CQI measured value using a reference signal (RS) included in the downlink received signal and also measures a PMI measured value first. The CQI measured value and/or PMI measured value measured in this way are/is generated by the uplink shared channel signal generation section 206 as an uplink shared channel signal, multiplexed with another signal by the uplink transmission signal multiplexing section 208 and sent to the BS 3 as an uplink transmission signal.

Next, in the BS 3 shown in FIG. 4, the uplink shared channel signal receiving section 308 receives an uplink shared channel signal. Since the uplink shared channel signal does not include prediction function implementing information, the CQI/PMI prediction section 311 predicts a CQI/PMI. The CQI measured value (reported value) and/or PMI measured value (reported value) included in the uplink shared channel signal are/is sent to the CQI/PMI prediction section 311. As shown in FIG.5(b), the CQI/PMI prediction section 311 performs linear prediction from past CQI measured values to obtain a CQI predicted value, and also performs linear prediction from past PMI measured values to obtain a PMI predicted value as shown in FIG.5(b).

The CQI predicted value obtained by the CQI/PMI prediction section 311 is sent to the scheduler 312, and the scheduler 312 schedules the downlink shared channel with a CQI predicted value (optimum CQI when downlink signal is transmitted). Furthermore, the PMI predicted value obtained by the CQI/PMI prediction section 311 is sent to the precoding weight selection section 313 and the precoding weight selection section 313 selects a precoding weight with a PMI predicted value (optimum PMI when downlink signal is transmitted). This precoding weight is used for MIMO transmission.

Thus, according to this radio communication method, even when a control delay exists, it is possible to transmit a (downlink signal using an optimum CQI/PMI and improve throughput characteristics of the downlink channel. Particularly since the BS 3 is implemented with a prediction function, it is not necessary to transmit/receive a prediction time or prediction function implementing information to/from the UE 2 and predict a CQI/PMI without implementing any new function in a normal LTE system compatible UE.

Although a case has been described in the above described radio communication method where information on a prediction time or prediction function implementing information is transmitted/received using the uplink/downlink shared channel, the present invention is not limited to this, but the information on a prediction time or prediction function implementing information may also be transmitted/received through another channel. Furthermore, although a case has been described in the above described radio communication method where a CQI and PMI are measured (predicted) and transmitted together, the present invention is not limited to this, but the CQI and PMI may be measured (predicted) and transmitted at separate timings.

The present invention is not limited to the above described embodiment, but may be implemented modified in various ways. For example, although a case has been described in the above described embodiment where feedback parameters are CQI and PMI, the present invention is not limited to this, but any parameters other than CQI or PMI may be likewise applicable as long as the parameters are feedback parameters for optimizing transmission of a downlink signal of the radio base station apparatus. Furthermore, although a case has been described in the above described embodiment where linear prediction is used to predict feedback parameters, the present invention is not limited to this, but any prediction method other than linear prediction may also be used. Furthermore, although a case has been described in the above described embodiment where a CQI or PMI which is a feedback parameter is measured using a reference signal (RS) included in a downlink signal, the present invention is not limited to this, but the present invention is likewise applicable to a case where feedback parameters are measured using a downlink control signal or downlink shared channel signal. Furthermore, the number of processing sections and the processing procedure or the like may be implemented modified as appropriate without departing from the scope of the present invention. Other elements of the present invention may also be implemented modified as appropriate without departing from the scope of the present invention.

## Claims

1. A mobile terminal apparatus comprising:
feedback parameter measuring section configured to measure a feedback parameter for a radio base station apparatus using a received signal and obtain a feedback value;
feedback parameter predicting section configured to predict a feedback parameter after a control delay in which the feedback value is reflected on transmission of a downlink shared channel and obtain a feedback predicted value; and
transmitting section configured to transmit the feedback predicted value to the radio base station apparatus.

2. The mobile terminal apparatus according to claim 1, wherein the feedback parameter predicting section predicts the feedback parameter according to a prediction time notified from the radio base station apparatus.

3. The mobile terminal apparatus according to claim 1 or 2, wherein the transmitting section transmits information indicating that the mobile terminal apparatus is provided with a feedback parameter prediction function to the radio base station apparatus, the information is used to predict a feedback parameter in the radio base station apparatus.

4. The mobile terminal apparatus according to claim 3, wherein the information indicating that the mobile terminal apparatus is provided with a feedback parameter prediction function is notified using a channel selected from a group composed of a random access channel, an uplink control channel and an uplink shared channel.

5. The mobile terminal apparatus according to any one of claims 1 to 4, wherein the feedback parameter is a CQI and/or PMI.

6. A radio base station apparatus comprising:
feedback parameter predicting section comfigured to predict an optimum feedback parameter for transmission of a downlink shared channel using a history of feedback values of feedback parameters for the radio base station apparatus from a mobile terminal apparatus and obtain a feedback predicted value;
precoding weight selecting section configured to select a precoding weight for MIMO channel transmission using the feedback predicted value; and
scheduling section configured to schedule a downlink shared channel using the feedback predicted value.

7. The radio base station apparatus according to claim 6, wherein the feedback parameter predicting section does not perform feedback parameter prediction of a mobile terminal apparatus provided with a feedback parameter prediction function.

8. The radio base station apparatus according to claim 6 or 7, further comprising transmitting section configured to transmit a prediction time to the mobile terminal apparatus, which the prediction time is used to predict a feedback parameter by the mobile terminal apparatus.

9. The radio base station apparatus according to claim 8, wherein the prediction time is transmitted through a channel selected from a group composed of a broadcast channel, a downlink control channel and a downlink shared channel.

10. The radio base station apparatus according to any one of claims 6 to 9, wherein the feedback parameter is a CQI and/or PMI.

11. A radio communication method comprising the steps of:
measuring a feedback parameter for a radio base station apparatus using a received signal and obtaining a feedback value by a mobile terminal apparatus;
predicting a feedback parameter after a control delay in which the feedback value is reflected on transmission of a downlink shared channel and obtaining a feedback predicted value; and
transmitting the feedback predicted value to the radio base station apparatus,
selecting a precoding weight of MIMO channel transmission using the feedback predicted value by the radio base station apparatus; and
scheduling a downlink shared channel using the feedback predicted value.

12. A radio communication method comprising the steps of:
measuring a feedback parameter for a radio base station apparatus using a received signal and obtaining a feedback value by a mobile terminal apparatus;
transmitting the feedback value to the radio base station apparatus,
predicting an optimum feedback parameter for transmission of a downlink shared channel using a history of the feedback value and obtaining a feedback predicted value by the radio base station apparatus;
selecting a precoding weight for MIMO channel transmission using the feedback predicted value; and
scheduling the downlink shared channel using the feedback predicted value.
